Europäisches Patentamt

European Patent Office

Office européen des brevets

(11) Publication number: **0 343 283 B1**

## EUROPEAN PATENT SPECIFICATION

(45) Date of publication of patent specification: **07.04.93**  (51) Int. Cl.⁵: **C01G 49/06**

(21) Application number: **88121025.6**

(22) Date of filing: **15.12.88**

(54) **Iron oxide for ferrite.**

(30) Priority: **23.05.88 JP 124022/88**

(43) Date of publication of application:
**29.11.89 Bulletin 89/48**

(45) Publication of the grant of the patent:
**07.04.93 Bulletin 93/14**

(84) Designated Contracting States:
**AT BE DE FR GB IT NL SE**

(56) References cited:
**US-A- 4 119 536**

**PATENT ABSTRACTS OF JAPAN, vol. 13, no. 158 (C-586)[3506] 17th April 1989.**

**PATENT ABSTRACTS OF JAPAN, page 625 C 78.**

(73) Proprietor: **Chemirite, Ltd.
Daiei-kakan 6F 7-12-14, Ginza
Chuo-ku Tokyo(JP)**

Proprietor: **TDK Corporation
13-1, Nihonbashi 1-chome Chuo-Ku
Tokyo-to(JP)**

(72) Inventor: **Hirai, Naoe
c/o Chemirite Ltd. 12-14, Ginza 7-chome
Chuo-ku Tokyo 104(JP)**
Inventor: **Murase, Tohoru
c/o Chemirite Ltd. 12-14, Ginza 7-chome
Chuo-ku Tokyo 104(JP)**
Inventor: **Okutani, Katsunobu
c/o TDK Corporation 13-1, Nihonbashi
1-chome
Chuo-ku Tokyo 103(JP)**
Inventor: **Mori, Teruo
c/o TDK Corporation 13-1, Nihonbashi
1-chome
Chuo-ku Tokyo 103(JP)**

(74) Representative: **Sajda, Wolf E., Dipl.-Phys.
MEISSNER, BOLTE & PARTNER Widenmayer-
strasse 48 Postfach 86 06 24
W-8000 München 86 (DE)**

## Description

The present invention relates to iron oxide, especially to iron oxide used for producing soft ferrite.

In general, a high-quality soft ferrite is produced by using iron oxide having an extremely low content of impurities. Table 1 shows examples of high-purity iron oxides for high-quality soft ferrite wherein the contents of the respective impurities are specified in ppm each.

Examples A and B in Table 1 concern high-purity iron oxides produced by the so called crystal refining method. In this crystal refining method, the crystals of iron sulfate or iron chloride are crystallized from an aqueous solution thereof, and these crystals are oxidized into iron oxide.

In this method, however, the amount of impurities is not reduced sufficiently by one round of crystallization because the impurities are partly included in the crystals. Therefore, the crystals obtained thereby are dissolved again in water etc., and the crystals are crystallized again. This treatment must be repeated several times in order to reduce the content of impurities of the crystals.

While it is possible to obtain a high-purity iron oxide containing not more than 0,005 % by weight of phosphorus P by this crystal refining method, the production process is very complicated and results in very high production cost of the iron oxide. In this crystal refining method the Mn content of the iron oxide is less than 0,1 % by weight.

Table 1

| Examples of high-purity iron oxides (Impurities in ppm) | | | | | | | | | | |
|---|---|---|---|---|---|---|---|---|---|---|
| | $SiO_2$ | P | Cu | Ni | Cr | Co | V | Al | Mn | Zn | Remarks |
| A | 40 | 23 | 6 | - | <1 | - | - | 11 | 660 | 340 | Crystal refining method |
| B | 85 | 27 | 2 | - | 72 | - | - | 19 | 540 | 13 | ditto |
| C | 31 | 15 | 3 | 32 | <1 | 12 | <1 | <1 | 503 | 3 | JP-A-235221/1987 |
| D | 51 | 20 | 5 | 40 | 3 | 16 | <1 | <1 | 550 | 5 | ditto |

Examples C and D in Table 1 refer to iron oxides containing not more than 0,005 % by weight of phosphorus P as described in JP-A-235 221/1987. In the method described in this context, the iron is electrolyzed, an anolyte is separated, floc is added thereto, the resulting solution is subjected to filtration, the filtrate is alkalified and oxidized, and thereafter the precipitate thereof is recovered and roasted. The iron oxide obtained by this method has an Mn content of less than 0,1 % by weight. However, as is clear from the above explanations this process is complicated, too, and very high production costs must be expected.

In connection with conventional high-ferrite iron oxides, wherein all sorts of impurities are evenly removed, the production process for producing such iron oxides is complicated and the production costs are very high. It should be considered, however, that among the impurities of iron oxide some sorts of impurities may impair the ferrite properties of soft ferrite, while other sorts do not impair them. Accordingly, if a type or sort of impurities which impair or deteriorate the ferrite properties could be removed selectively from the iron oxide by a simple process, an iron oxide for high-quality soft ferrite may be produced in a comparatively simple process and with low costs.

The present invention is based upon this deliberation and is to provide an iron oxide for high-quality soft ferrite which can be produced by a comparatively simple process wherein the impurities impairing and deteriorating any ferrite properties or characteristics are removed selectively.

According to the present invention, an iron oxide is provided containing an amount of 0,1 to 0,3 % by weight of Mn and not more than 0,005 % by weight of P. According to a further aspect of the invention this iron oxide is used for making high-quality soft ferrite. According to a further aspect according to the invention a method is provided for producing such an iron oxide.

According to the invention, the problem is solved in an advantageous manner and the desired iron oxide can easily be produced at low costs. Moreover, the ferrite properties of a soft ferrite produced by using the iron oxides according to the invention are at the same level as those produced by using high-purity iron oxides. So, the problem underlying the invention could be solved in a surprising manner.

Further aspects, features and advantages of the invention will be readily aparent from the detailed description of preferred embodiments explained below, wherein reference is made to the accompanying drawings in which

Fig. 1    shows the relation between the P content of iron oxides and the AC initial magnetic

permeability $\mu$iac; and

Fig. 2    shows the relation between the P content of iron oxides and the relative loss factor tan$\delta$/$\mu$iac.

An example of a method for producing iron oxide according to the present invention will be explained below. A steel sheet scrap (carbon steel) was added to a hydrochloric acid having a HCl concentration of 18 %. The solution was subjected to heating and stirring until the steel scrap was dissolved in order to obtain an iron chloride solution having a pH-value of about 1,0. Then, 20 l of nitric acid having a concentration of 60 % were added to every 1 m$^3$ of this iron chloride solution, and the obtained solution was boiled for an hour.

Subsequently, another steel scrap was added to the boiled solution, and the solution was heated and stirred in order to obtain a solution having a pH-value of 3,5. The mechanical stirring was continued for about further 6 hours. Then, insolubles were removed from this solution by filtration using an ordinary filter cloth, and the obtained filtrate free of respective insolubles was oxidized and roasted in a fluidized roasting furnace wherein the fluidized layer had a temperature of about 700 °C so that iron oxide was produced thereby.

Table 2 given below comprises several examples of iron oxides having different contents of impurities specified in % by weight and ppm, respectively. Examples No. 1 to No. 8 in Table 2 refer to examples of iron oxides produced according to the invention and having the specified content of impurities. Examples No. 9 to No. 13 are examples of commercial iron oxides used for a soft ferrite of ordinary grades wherein the content of impurities is specified.

Examples No. 14 and No. 15 correspond to the Examples A and B in Table 1 and give examples of high-purity iron oxides used for high-quality soft ferrite.

Examples No. 1 to No. 8 according to the present invention are different from Examples No. 14 and No. 15 because the Mn content of Examples No. 1 to No. 8 is 0,1 to 0,3 % by weight, while the Mn content of examples No. 14 and No. 15 is less than 0,1 % by weight.

Examples No. 1 to No. 8 according to the present invention are also different from Examples No. 9 to No. 13, because the P content of Examples No. 1 to No. 8 is not more than 0,005 % by weight, while the P content of Examples No.9 to No. 13 is more than 0,005 % by weight.

Table 2

| Content of impurities in iron oxide (in % by weight and ppm, respectively) | | | |
|---|---|---|---|
| No. | Mn (%) | P (ppm) | SiO$_2$ (ppm) | Remarks |
| 1 | 0.23 | 27 | 95 | Iron oxide according to this invention |
| 2 | 0.16 | 28 | 50 | |
| 3 | 0.21 | 28 | 55 | |
| 4 | 0.28 | 29 | 75 | |
| 5 | 0.18 | 26 | 80 | |
| 6 | 0.22 | 34 | 72 | |
| 7 | 0.28 | 41 | 83 | |
| 8 | 0.23 | 48 | 68 | |
| 9 | 0.26 | 150 | 105 | Iron oxide for ordinary soft ferrite |
| 10 | 0.23 | 90 | 85 | |
| 11 | 0.18 | 64 | 95 | |
| 12 | 0.22 | 160 | 80 | |
| 13 | 0.23 | 155 | 60 | |
| 14 | 0.006 | 23 | 40 | High-purity iron oxide by crystal refining method |
| 15 | 0.054 | 27 | 85 | |

In the following, embodiments according the invention will be explained in more detail and it will come apparent why it is sufficient for the intended purpose to employ iron oxide containing 0,1 to 0,3 % by weight of Mn and not more than 0,005 % by weight of P.

For finding out about the situation, the inventors used each of the iron oxides listed in Table 2 and mixed them with a high-purity manganese oxide and a high-purity zinc oxide in a usual manner and using a molecular ration of $Fe_2O_3$:MnO:ZnO given by 53:24,5:22,5. The mixture was sintered at a temperature of 1350 °C wherein samples or test pieces of ring shape were obtained having an outer diameter of 25 mm, an inner diameter of 15 mm and a thickness of 5 mm. Thereafter, the AC initial magnetic permeability $\mu$iac and the relativ loss factor tan$\delta$/$\mu$iac at 1 kHz and 25 °C were measured in accordance with the method prescribed in JIS C 2561.

In Table 3 given below the contents of the mixed powders and the magnetic properties of each of the test pieces are listed. The numbers of the test pieces in Table 3 refer to the same numbers as in Table 2 indicating that the test pieces were produced by using the respective iron oxide.

Table 3

| No | Contents of the Mixed Powders | | | | | Magnetic Properties | |
|----|------|------|------|------|------|------|------|
| | *Fe$_2$O$_3$ % | *MnO % | *ZnO % | *SiO$_2$ ppm | P ppm | $\mu$iac | tan$\delta$/$\mu$iac |
| 1 | 70.28 | 14.48 | 15.24 | 108 | 27 | 10900 | $3.5 \times 10^{-6}$ |
| 2 | 70.39 | 14.40 | 15.21 | 112 | 26 | 11200 | $3.6 \times 10^{-6}$ |
| 3 | 70.37 | 14.44 | 15.19 | 124 | 27 | 10500 | $3.2 \times 10^{-6}$ |
| 4 | 70.31 | 14.47 | 15.22 | 118 | 28 | 11500 | $3.6 \times 10^{-6}$ |
| 5 | 70.34 | 14.39 | 15.27 | 125 | 24 | 10400 | $3.0 \times 10^{-6}$ |
| 6 | 70.34 | 14.41 | 15.25 | 118 | 32 | 9800 | $3.9 \times 10^{-6}$ |
| 7 | 70.40 | 14.42 | 15.18 | 115 | 37 | 10100 | $3.8 \times 10^{-6}$ |
| 8 | 70.33 | 14.44 | 15.23 | 122 | 44 | 9300 | $4.2 \times 10^{-6}$ |
| 9 | 70.38 | 14.42 | 15.20 | 129 | 104 | 7500 | $4.6 \times 10^{-6}$ |
| 10 | 70.43 | 14.40 | 15.17 | 121 | 62 | 7900 | $4.5 \times 10^{-6}$ |
| 11 | 70.35 | 14.46 | 15.19 | 116 | 52 | 8100 | $4.9 \times 10^{-6}$ |
| 12 | 70.33 | 14.45 | 15.22 | 110 | 117 | 7700 | $6.4 \times 10^{-6}$ |
| 13 | 70.42 | 14.38 | 15.20 | 114 | 110 | 7900 | $5.0 \times 10^{-6}$ |
| 14 | 70.35 | 14.42 | 15.23 | 120 | 22 | 10800 | $3.1 \times 10^{-6}$ |
| 15 | 70.38 | 14.45 | 15.17 | 125 | 26 | 10400 | $3.4 \times 10^{-6}$ |

* Weight percentage when Fe$_2$O$_3$, MnO and ZnO amount to 100%.

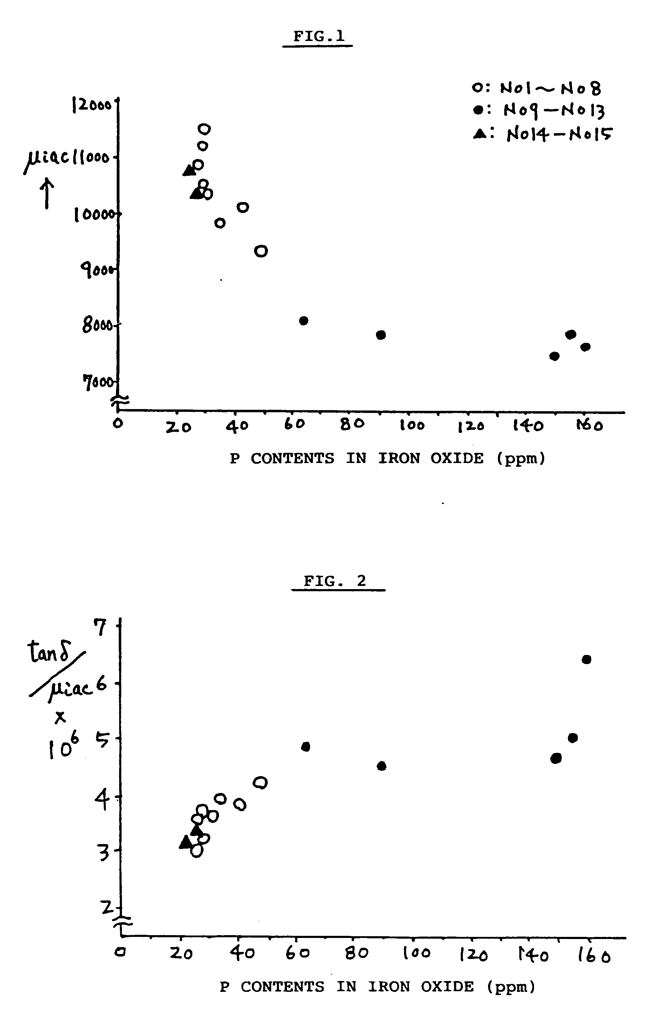

Fig. 1 of the drawings represents the relation between the P content of iron oxides and the AC initial magnetic permeability $\mu$iac according to Table 3, while Fig. 2 represents the relation between the P content of iron oxides and the relative loss factor tan$\delta$/$\mu$iac according to Table 3.

As shown in Table 2 and Table 3, the P content of the mixed powder decreases when using iron oxides having a low P content. As shown in Fig. 1 and Fig. 2, the magnetic properties of soft ferrite are exceedingly improved when using the iron oxides having the low P content.

Hitherto, regarding the sorts or types of impurities which impair and deteriorate the ferrite properties, the general concept was not sufficiently clear; therefore, people felt obliged to use very expensive iron oxide of high purity grades for producing high-quality soft ferrite.

The present invention was made and is based upon the new knowledge and perception that among the impurities in iron oxides it is phosphorus P which has the closest relation with the magnetic properties of soft ferrite, and that by selectively decreasing the P content in iron oxides of ordinary grades the magnetic properties of soft ferrite can be improved exceedingly.

The test pieces No. 1 to No. 8 made by using iron oxides having a P content of not more than 0,005 % by weight have a lower P content in the mixed powders and exhibit very excellent magnetic properties and characteristics compared with the test pieces No. 9 to No. 13 made of iron oxides of ordinary grades. Among the text pieces, No. 1 to No. 5 according to Table 3 represent examples made by using iron oxides of the present invention the P content of which was controlled to be less than 0,003 % by weight and they exhibited the same level of magnetic properties as those according to test pieces No. 14 and No. 15.

According to the invention, the iron oxide contains Mn in the range of 0,1 to 0,3 % by weight, and this iron oxide has the advantage that it can be produced by a simple process and at low cost.

According to the invention, such an iron oxide can be prepared by a process wherein a steel scrap is dissolved in hydrochloric acid in order to prepare an iron chloride solution, the iron chloride solution is dephosphorized by a simple process, whereupon the dephosphorized solution is roasted and the iron oxid is produced.

In general, iron scrap contains about 0,4 % by weight of Mn, and this manganese Mn is dissolved in the iron chloride solution. By the dephosphorizing and roasting process Mn is not decreased in its quantity and an amount of 0,1 to 0,3 % by weight of Mn are contained in the iron oxide according to the invention.

4

However, as mentioned above, Mn is a component in the mixture for making soft ferrite, wherein a content of 0,1 to 0,3 % by weight of Mn in the iron oxide does not impair the magnetic properties of soft ferrite.

According to the present invention, various iron oxides were prepared having an Mn content of 0,1 to 0,3 % by weight and a P content of not more than 0,005 % by weight, wherein test pieces other than those listed in Table 3 have been produced therefrom and the magnetic properties thereof have been investigated. This investigation revealed results of the same level as for examples No. 1 to No. 8 in Table 3. Accordingly, essential features of the present invention are to prepare and to use iron oxides having a Mn content of 0,1 to 0,3 % by weight and a P content of not more than 0,005 % by weight.

Hereinafter, a new method according to the invention will be described for selectively removing phosphorus P from iron oxide. From the following explanations it will be clear why ion oxide can be obtained the P content of which is not more than 0,005 % by weight.

A steel scrap usually contains phosphorus P in an amount of 0,03 % by weight. When this material is dissolved in hydrochloric acid P is also dissolved into the solution. In order to oxidize P in the solution to obtain an oxidation number of 5+, nitric acid is added to the solution, and then the solution is boiled. It should be noted that $P^{5+}$ formed in the solution behaves as described in the following formulae

$$H_3PO_4 = H^+ + H_2PO_4^- \quad (1)$$
$$H_2PO_4^- = H^+ + HPO_4^{2-} \quad (2)$$
$$HPO_4^{2-} = H^+ + PO_4^{3-} \quad (3).$$

When the solution is acidic and has a low pH value, the dissociation according to formulae (2) and (3) does not take place resulting in that $H_3PO_4$ and $H_2PO_4^-$ are formed in the solution. In these circumstances, P cannot be removed from the solution having a low pH-value because of the fact that $H_3PO_4$ and the metallic salts of $H_2PO_4^-$ are water soluble.

However, when the pH-value of this solution is raised to 3,5 by adding another steel scrap thereto, dissociations according to formulae (2) and (3) can take place resulting in that $HPO_4^{2-}$ and $PO_4^{3-}$ ions are produced. These $HPO_4^{2-}$ and $PO_4^{3-}$ ions may combine and react with metallic ions in the solution and form metallic salts of $HPO_4^{2-}$ and $PO_4^{3-}$, wherein the metallic salts of $HPO_4^{2-}$ and $PO_4^{3-}$ are insoluble in the solution so that they can be separated as insolubles from the solution by filtration.

As will be apparent from the above explanations, the present invention provides iron oxide wherein the content of phosphorus P as an impurity, substantially impairing the ferrite properties, could be sufficiently decreased. Thus, neglecting attention to all sorts of impurities and concentrating on a really relevant impurity with respect to ferrite properties the invention was successful in overcoming prior art problems based upon complicated production processes and high costs involved.

In the iron oxide according to the present invention Mn as an impurity is contained and can be accepted since nevertheless the iron oxide shows such excellent magnetic properties as the high purity iron oxides produced by the crystal refining method. The iron oxide according to the present invention can be obtained by a remarkably simplified production method and at low costs as compared with the crystal refining method.

**Claims**

1. An iron oxide for ferrite containing an amount of Mn in the range of 0,1 to 0,3 % by weight and an amount of P of not more than 0,005 % by weight.

2. A method for producing iron oxide for ferrite, especially for soft ferrite, characterized by the following steps:
   - Preparing an iron chloride solution by dissolving a steel scrap in a hydrochloric acid,
   - Dephosphorizing the solution by adjusting the pH-value, oxidizing P contained therein and initiating reactions with P to form insoluble P compounds,
   - Removing the insolubles and subjecting the dephosphorized solution to oxidizing roasting in order to produce iron oxide having a P content of not more than 0,005 % by weight and a Mn content of 0,1 to 0,3 % by weight.

3. The method according to claim 2, characterized by the following steps:
   - Preparing a solution by dissolving steel scrap in hydrochloric acid,

5

- Oxidizing P contained in the solution to a high oxidation number by adding nitric acid,
- Raising the pH-value of the solution and boiling the solution so that dissociations take place and insoluble metallic salts of P are formed,
- Separating the insolubles from the solution by filtration, and
- Oxidizing roasting of the filtrate.

4. Use of the iron oxide according to any of claims 1 to 3 for making ferrite, especially soft ferrite.

5. The use of claim 4,
characterized in that the iron oxide is mixed with a high-purity manganese oxide and a high-purity zinc oxide in a molecular ratio of
$Fe_2O_3 : MnO : ZnO = 53 : 24,5 : 22,5$
and the mixture is sintered at a temperature of 1350 ° C to obtain molded articles of desired shape and size.

**Patentansprüche**

1. Eisenoxid für Ferrit, das eine Menge von Mn in dem Bereich von 0,1 bis 0,3 Gewichtsprozent und eine Menge von P von nicht mehr als 0,005 Gewichtsprozent enthält.

2. Verfahren zur Herstellung von Eisenoxid für Ferrit, insbesondere für weiches Ferrit, gekennzeichnet durch die folgenden Schritte:
   - Herstellen einer Eisenchloridlösung durch das Lösen von Stahlabfall oder Stahlschrott in Salzsäure,
   - Entphosphoren der Lösung durch Einstellen des pH-Wertes, Oxidieren des darin enthaltenen P und Einleiten von Reaktionen mit P, um unlösliche P-Verbindungen zu bilden,
   - Entfernen der unlöslichen Bestandteile und Behandeln der vom Phosphor befreiten Lösung mit einem oxidierenden Rösten, um Eisenoxid zu erzeugen, das einen P-Gehalt von nicht mehr als 0,005 Gewichtsprozent und einen Mn-Gehalt von 0,1 bis 0,3 Gewichtsprozent besitzt.

3. Verfahren nach Anspruch 2,
   gekennzeichnet durch die folgenden Schritte:
   - Herstellen einer Lösung durch das Lösen von Stahlabfall oder Stahlschrott in Salzsäure,
   - Oxidieren des in der Lösung enthaltenen P auf eine hohe Oxidationszahl durch das Hinzufügen von Salpetersäure,
   - Erhöhen des pH-Wertes der Lösung und Kochen der Lösung, so daß Dissoziationen stattfinden und unlösliche Metallsalze von P gebildet werden,
   - Abtrennen der unlöslichen Bestandteile von der Lösung durch Filtrieren, und
   - oxidierendes Rösten des Filtrats.

4. Verwendung des Eisenoxids nach einem der Ansprüche 1 bis 3 zur Herstellung von Ferrit, insbesondere weichem Ferrit.

5. Verwendung nach Anspruch 4,
   dadurch gekennzeichnet,
   daß das Eisenoxid gemischt wird mit einem Manganoxid hoher Reinheit und einem Zinkoxid hoher Reinheit in einem Molekularverhältnis von
   $Fe_2O_3 : MnO : ZnO = 53 : 24,5 : 22,5$
   und daß die Mischung bei einer Temperatur von 1350° C gesintert wird, um geformte Gegenstände mit gewünschter Gestalt und Größe zu erhalten.

**Revendications**

1. Oxyde de fer pour ferrite contenant 0,1 à 0,3% en poids de manganèse et une quantité de phosphore ne dépassant pas 0,005% en poids.

2. Procédé pour produire un oxyde de fer pour ferrites, notamment pour ferrites doux, caractérisé par les stades suivants :

- préparer une solution de chlorure de fer en dissolvant des riblons d'acier dans de l'acide chlorhydrique;
- déphosphorer la solution en ajustant la valeur du pH, oxyder le phosphore contenu dans la solution et déclencher des réactions avec le phosphore pour former des composés de phosphore insolubles;
- retirer les produits insolubles et soumettre la solution déphosphorée à un grillage d'oxydation afin d'obtenir un oxyde de fer ayant une teneur en phosphore ne dépassant pas 0,005% en poids et une teneur en manganèse de 0,1 à 0,3% en poids.

3. Procédé selon la revendication 2, caractérisé par les stades suivants :
   - préparer une solution en dissolvant des riblons d'acier dans de l'acide chlorhydrique;
   - oxyder le phosphore contenu dans la solution à un degré d'oxydation élevé en ajoutant de l'acide nitrique;
   - élever la valeur du pH de la solution et faire bouillir la solution de façon que des dissociations s'effectuent et que soient formés des sels métalliques de phosphore insolubles;
   - séparer les produits insolubles de la solution par filtration; et
   - griller le filtrat pour l'oxyder.

4. Utilisation de l'oxyde de fer selon l'une des revendications 1 à 3 pour fabriquer un ferrite, notamment un ferrite doux.

5. Utilisation selon la revendication 4, caractérisé en ce que l'oxyde de fer est mélangé à un oxyde de manganèse de pureté élevée et à un oxyde de zinc de pureté élevée selon un rapport moléculaire $Fe_2O_3:MnO:ZnO = 53:24,5:22,5$, et en ce que le mélange est fritté à une température de 1350°C pour obtenir des objets moulés de la forme et de la dimension recherchées.

FIG.1

O: No1~No8
●: No9—No13
▲: No14—No15

P CONTENTS IN IRON OXIDE (ppm)

FIG. 2

P CONTENTS IN IRON OXIDE (ppm)